# EUROPEAN PATENT APPLICATION

(11) **EP 3 698 960 A1**
(43) Date of publication of application: **26.08.2020**
(21) Application number: 20157106.4
(22) Date of filing: 13.02.2020
(51) Int. Cl.: B29D 35/14, B29C 39/26, B29C 39/44, B29C 45/56, B29C 33/20, B29C 45/66, B29C 67/24, B29C 45/17, B29D 35/08, B29K 75/00, B29C 39/02, B29C 45/16, B29L 31/50, B29C 45/33

(54) **MOULD HOLDER FOR INJECTION MOULDING WITH AN ELECTRIC SERVO-MOTOR**

(30) Priority: 13.02.2019 IT 201900002057
(71) Applicant: Ama.Gusberti S.r.l., 27029 Vigevano (Pavia) (IT)
(72) Inventor: GRECO, Stefano, 27029 Vigevano (PAVIA) (IT)
(74) Representative: Belloni, Giancarlo

(57) **Abstract**

The invention relates to a mould holder 30 for injection moulding processing of polyurethane 34. The mould holder is conformed for holding a mould 32 which comprises a vertically movable bottom wall 36, openable/closable side walls 38 and at least one removable die 40 suitable for constituting the top wall. The mould holder comprises:
- a stiff structure 42;
- a working portion 44 suitable for receiving the side walls of the mould;
- a supporting surface 46 suitable for vertically supporting and moving the bottom wall of the mould; and
- an upper assembly suitable for holding and moving the at least one removable die of the mould.

The mould holder of the invention is characterized in that it comprises an electric servo-motor 50 suitable for controlling the movement of the supporting surface with respect to the stiff structure.

## Description

The present invention relates to a mould holder for injection moulding processing of polyurethane, in particular for closed mould co-moulding processes.

Polyurethane (PU) is widely used on an industrial level for the production of various articles. The advantages commonly recognized to polyurethane are its low cost and the possibility of obtaining very different mechanical and aesthetic characteristics by varying its composition and processing. Here and below, by co-moulding we mean an injection moulding technology wherein two different polyurethane compositions are used, both injected into the same mould at different times.

By way of example, in the following discussion, the closed mould injection co-moulding will be specifically considered, e.g. in the production of footwear. It is understood that the invention can also be used in other similar areas where problems similar to those addressed here arise.

In the production of footwear, it is known to obtain the sole-assembly with a single injection co-moulding process. The known procedure will be described below with reference to the appended Figures 2 to 7.

In a first step of the procedure (schematically shown in Figure 2), a closed mould 32 is provided, whose walls define an internal cavity 54. The bottom wall 36 of the mould 32 can be moved by means of a pneumatic piston. In a second step (Figure 3), a predetermined quantity of a first polyurethane 34 having a first formulation is injected into the cavity 54. In a third step of the procedure (Figure 4) the pneumatic piston is activated, which raises the bottom wall 36. In this way it is possible to close the first feeding channel and compress the first polyurethane 34, compacting it with a first predefined compaction degree. When this first polyurethane 34 is polymerized, the lower portion of the sole-assembly 52, called outsole 56 is obtained. In a fourth step (Figure 5), the top wall of the mould 32 is removed, freeing a second feeding channel. In a fifth step (Figure 6), after having provided a shoe upper 58 so as to close the mould 32 at the top, a predetermined quantity of a second polyurethane 34 having a second formulation is injected into the cavity 54. The second polyurethane is therefore injected between the shoe upper 58 and the newly created outsole 56. In a sixth step of the procedure (Figure 7) the pneumatic piston is activated again, which raises the bottom wall 36. In this way it is possible to close the second feeding channel and compress the second polyurethane 34, compacting it with a second predefined compaction degree. When this second polyurethane is polymerized, the inner portion of the sole-assembly, called midsole 57 is obtained. The midsole has the structural purpose of joining the shoe upper to the outsole and, in use, acts as a damper.

From the above description it can be easily understood how co-moulding allows to exploit at best the versatility of polyurethane and its different formulations. With the described procedure, a product with optimal properties for the market is obtained in a short time and in a simple way. As the skilled person can easily appreciate, the schematic figures from 2 to 7 represent the mould in a simplified form. Often in reality, e.g., the side walls of the mould are, in turn, movable, usually in transverse directions with respect to the displacement direction of the piston. The side walls of the mould, e.g., can be shaped so as to obtain undercuts in the cavity of the mould. The possibility to open the side walls is therefore fundamental in order to remove the finished sole-assembly from the mould.

Such solution, although widely used and appreciated, is not without drawbacks, some of which are connected to the use of the pneumatic piston.

Particularly, as already indicated above, each displacement of the bottom wall of the mould must be controlled and predefined, so as to obtain the desired result. Using a pneumatic piston, each displacement must be set by manually adjusting specific ring nuts. The ring nut adjustment is a procedure that requires experience and patience on the part of the operator. The adjustment takes place by successive approximations, being able to rely only on indices relating to the absolute positioning of each ring nut. Once the correct adjustment has been obtained for a given first sole-assembly model, the whole batch can be produced, until a second sole-assembly model, different from the first model, has to be put into production. At this point the ring nut adjustments must be completely revised for the new production batch. In the event that it is necessary to return to produce a new batch of sole-assemblys of the first model, the ring nuts should be re-adjusted, effectively facing the next approximation procedure from the beginning.

Furthermore, the very nature of the pneumatic piston implies that, given a supply pressure, the force and displacement of the piston are uniquely linked to each other. This does not allow, e.g., to obtain different forces with the same displacement, effectively preventing the compaction degree of the polyurethane from changing at will.

Furthermore, the nature of the pneumatic piston does not allow to change the displacement speed at will. Once a certain speed has been set (typically by defining the flow rate of the incoming air), the same speed is maintained by the piston during all processes and during each of its free strokes, until it meets the resistance offered by the polyurethane and/or the mechanical limit switch. This particularity does not allow to manage in an optimal way neither the different steps within a single compaction, nor the different compactions that may be necessary within a single production cycle.

Therefore, the object of the present invention is to overcome the drawbacks underlined before with respect to the known art.

Particularly, a task of the present invention is to make available a mould holder for injection moulding processing of polyurethane which makes it possible to easily adjust the displacements of the mould.

Furthermore, a task of the present invention is to make available a mould holder for injection moulding processing of polyurethane which makes it possible to manage the forces and displacements of the mould separately. Lastly, a task of the present invention is to make available a mould holder for injection moulding processing of polyurethane which makes it possible to adjust the speed of the displacement, e.g. between one processing and another or along the single working stroke of the mould.

Such object and tasks are achieved by means of a mould holder for injection moulding processing of polyurethane according to claim 1.

To better understand the invention and appreciate its advantages, some of its exemplifying and non-limiting embodiments are described below with reference to the accompanying drawings, wherein:

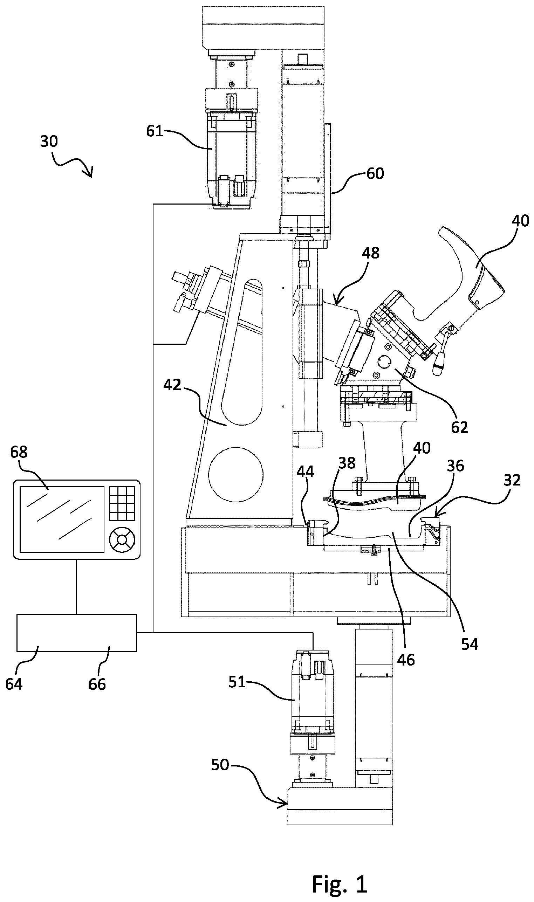

- Figure 1 schematically shows a side view of a mould holder according to an embodiment of the invention;

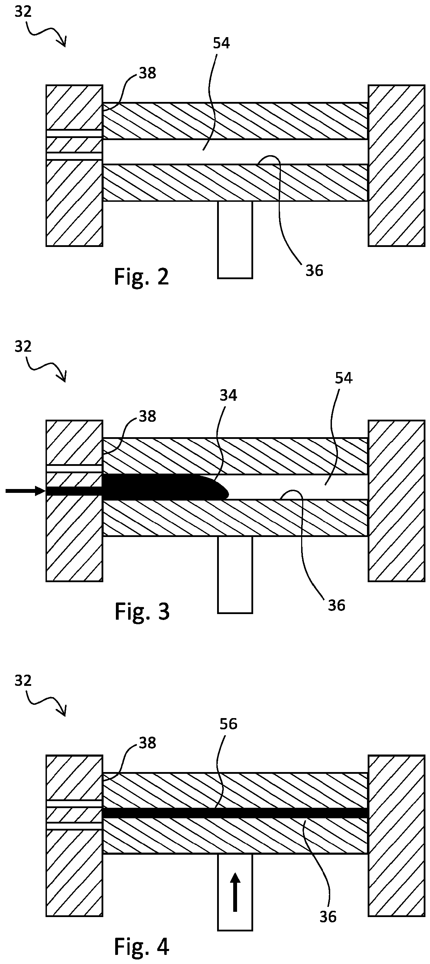

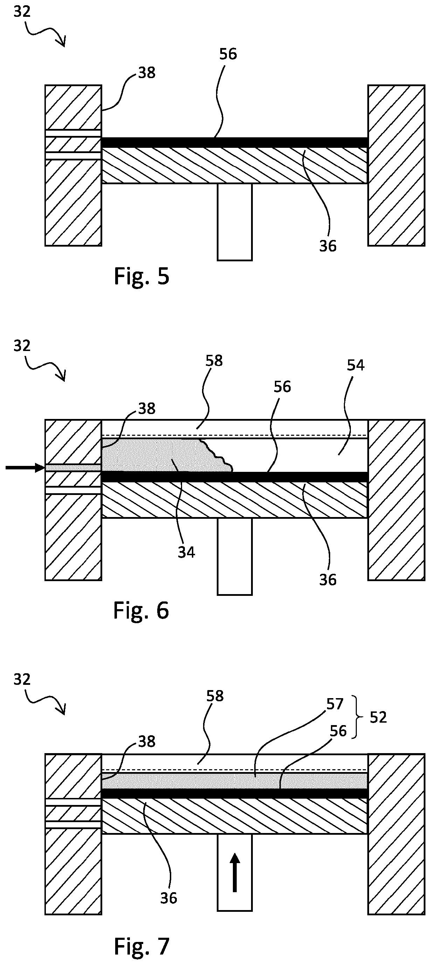

- Figures 2 to 7 schematically show some successive steps of a polyurethane co-moulding method according to the prior art;

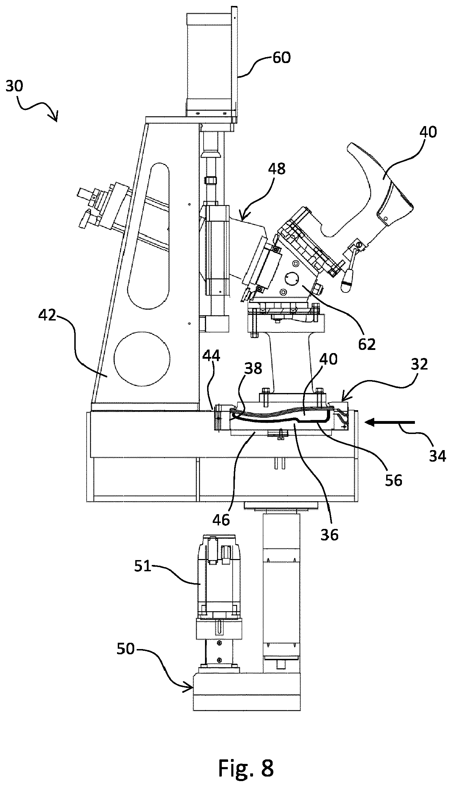

- Figures 8 to 15 schematically show some successive steps of a polyurethane co-moulding method performed with a mould holder similar to that of Figure 1.

The invention relates to a mould holder for injection moulding processing of polyurethane, indicated as a whole with 30. The mould holder 30 is conformed for holding a mould 32 for the injection moulding of polyurethane 34. The mould 32 comprises a vertically movable bottom wall 36, openable/closable side walls 38 and at least one removable die 40 suitable for constituting the top wall of the mould 32. the mould holder 30 comprises:
- a stiff structure 42;
- a working portion 44 suitable for receiving the side walls 38 of the mould 32;
- a support surface 46 suitable for vertically holding and moving the bottom wall 36 of the mould 32; and
- an upper assembly 48 suitable for holding and moving the at least one removable die 40 of the mould 32.

The mould holder 30 of the invention is characterized in that it comprises an electric servo-motor 50 suitable for controlling the movement of the support surface 46 with respect to the stiff structure 42.

In the context of the present discussion, some terminological conventions have been adopted in order to make reading easier and smoother. These terminological conventions are clarified below with reference to the appended figures.

Since the invention is designed to be used in presence of gravitational acceleration g, it is intended that the latter uniquely defines the vertical direction. Likewise, it is understood that, based on gravity acceleration g, the terms "high", "higher", "above" and the like are defined unequivocally, with respect to the terms "low", "lower", "below" and the like. Such terms must be understood in a relative sense and exclusively for descriptive and non-limiting purposes. In fact, as the skilled person can well understand, the mould holder 30 according to the invention is described below in its most usual arrangement, the vertical one. Despite this, however, nothing prevents it from being arranged in a different way, without thereby departing from the scope of the invention.

The moulds 32 for the production of sole-assemblys 52 by means of the injection moulding of polyurethane 34 are well known. They are standardized in term of external shape, dimensions and methods of constraint in order to be compatible with different mould holders 30 available on the market. The mould holder 30 according to the invention maintains these standardized parameters in order to be completely compatible with all the moulds 32, even with the existing ones.

In a manner known per se, the mould 32 comprises a vertically movable bottom wall 36, openable/closable side walls 38 and at least one removable die 40 suitable for constituting the top wall. The bottom wall 36 is the one that defines the external shape and pattern of the outsole 56. The side walls 38 can be opened/closed, usually with a movement in the horizontal plane, in order to be able to open and close the cavity 54 of the mould 32. In some embodiments, the side walls 38 of the mould 32 form an undercut in the cavity 54 and the opening of the side walls 38 is therefore necessary to extract the finished sole-assembly 52 from the mould 32. Furthermore, the openable/closable side walls 38 allow to define shape couplings with the removable dies 40 which constitute the top wall of the mould 32. The removable dies 40 are usually two, interchangeable with each other according to the specific processing steps. A first removable die 40 is intended to define inside the mould 32 the cavity 54 suitable for forming the outsole 56. Preferably, in a manner known per se, the coupling between the first removable die 40 and the side walls 38 defines a slight play, suitable for allowing the air to escape during the lifting of the bottom wall 36 of the mould 32. A second removable die 40 is suitable for receiving a shoe upper 58 or other semifinished product intended to be constrained to the sole-assembly 52 which is produced in the mould 32. Usually the shoe upper 58 is fitted on the second removable die 40 which, not surprisingly, takes the form of a foot. Also, in this case, a passage must be provided for venting the air during the lifting of the bottom wall 36 of the mould 32. Often, for this purpose, the porosity of the shoe upper 58 or parts thereof is exploited.

As already mentioned above, the mould holder 30 of the invention comprises a stiff structure 42, i.e. intended for providing a firm support to the remaining parts of the mould holder 30 and mould 32. The stiffness of such structure 42 is preferably suitable for the specific industrial sector, i.e. allowing to maintain the relative positions of the various elements mounted on it, with the typical tolerances of this type of processing. The stiff structure 42 can, in turn, be fixed to the ground or mounted in a movable way on a plant, for example on a carousel plant.

A working portion 44 is arranged on the stiff structure 42, which is suitable for receiving the side walls 38 of the mould 32 and for allowing its opening and closing movements, respectively. In some embodiments, the side walls 38 of the mould 32 comprise auxiliary actuators suitable for imposing the opening and closing movements on the side walls 38.

The mould holder 30 comprises a support surface 46 which is suitable for vertically holding and moving the bottom wall 36 of the mould 32. Preferably the bottom wall 36 of the mould 32 can be releasably constrained to the support surface 46 of the mould holder 30.

Lastly, the mould holder 30 comprises an upper assembly 48 suitable for holding and moving the at least one removable die 40 of the mould 32. Preferably the upper assembly 48 comprises a linear actuator 60 on which a revolving head 62 is mounted. Preferably the revolving head 62 is motor-powered.

As already mentioned above, usually the removable dies 40 are two for each mould 32. The upper assembly 48 is preferably suitable for holding and moving all the removable dies 40 intended to cooperate with a single mould 32. A known and appreciated solution for obtaining this result is shown in figures 8 to 15. In such solution, the two removable dies 40 intended to cooperate with a single mould 32 are mounted on the revolving head 62 which can alternatively arrange them close to the cavity 54 of the mould 32, according to the specific steps of the procedure. Furthermore, the at least one removable die 40 must preferably be moved vertically towards or, respectively, away from the cavity 54 of the mould 32. Preferably the linear actuator 60 is intended for this purpose, moving the entire revolving head 62.

As already mentioned above, the working portion 44, the support surface 46 and the upper assembly 48 of the mould holder 30 are shaped so as to be able to co-operate with the related portions of the mould 32 made according to industry standards.

The mould holder 30 according to the invention is characterized in that it comprises an electric servo-motor 50 suitable for controlling the movement of the support surface 46 with respect to the stiff structure 42. Preferably the electric servo-motor 50 comprises an electric motor 51 of the brushless type and/or of the stepper type. In the mould holder 30 of the invention, therefore, the electric servo-motor 50 replaces the commonly used pneumatic piston.

According to some embodiments, the linear actuator 60 which moves the upper assembly 48 comprises a pneumatic piston, similar to that which, in the solutions of the prior art, controls the movement of the bottom wall 36 of the mould 32. However, in some uses of the mould holder 30, the stroke adjustment of the linear actuator 60 also causes problems similar to those already described above for the lower pneumatic piston. Therefore, according to some embodiments of the invention (e.g. that of Figure 1), also the linear actuator 60 comprises an electric servo-motor 61 in all respects similar to the electric servo-motor 50 described for the movement of the bottom wall 36 of the mould 32.

Preferably the mould holder 30 comprises a control unit 64, a memory unit 66 and a user interface 68. The control unit 64 is preferably suitable for actuating the electric servo-motor 50 which controls the movement of the support surface 46. The fact that the electric servo-motor 50 is actuated by means of the specific control unit 64 makes it possible to precisely adjust its movements, simply by setting the related parameters, e.g. through the user interface 68. Furthermore, once some parameters have been set and have proved to be correct for a certain processing, such parameters can be stored in the memory unit 66 and recalled at any time they become necessary, typically to redo the same processing. Consider that these operations, to date, have always been carried out manually.

Furthermore, the control unit 64 can actuate the electric servo-motor 50 by controlling it alternately by force or by displacement, thus obtaining great application flexibility. In this way, e.g., it is possible to obtain higher compaction degrees of the same polyurethane formulation 34, simply by increasing the quantity of material injected per unit of volume and proportionally increasing the force exerted by the electric servo-motor 50. Furthermore, the control unit 64 can actuate the electric servo-motor 50 by imposing different displacement speeds according to the specific needs. The displacement speed imposed on the support surface 46, and therefore on the bottom wall 36 of the mould 32, can be varied from one step of the processing to the other, but it can also be varied during the same step along the single working stroke. This possibility allows to obtain optimal results in relation to those phenomena which are influenced by the application times of the different processing steps. Some of these phenomena are, e.g., the evacuation of air from the cavity 54 of the mould 32, the reaction between the isocyanate and the polyol during the formation of the polyurethane 34, the surface cross-linking of the polyurethane 34, the adhesion of the polyurethane 34 to the shoe upper 58 and outsole 56, the formation of bubbles and gaps within the polyurethane mass 34.

Furthermore, the control unit 64 can preferably also actuate one or more of the following elements: the linear actuator 60 of the upper assembly 48, the revolving head 62 of the upper assembly 48, the auxiliary actuators of the side walls 38, the polyurethane injection means 34. As the skilled person can well understand, the possibility of controlling multiple actuators through a single control unit 64 allows to optimize the synchrony and the succession of the processing steps.

Below, with reference to Figures 8 to 15, a method of polyurethane co-moulding performed with a mould holder 30 according to the invention is briefly described.

Figure 8 shows the step wherein the mould 32 is closed, polyurethane 34 is injected into the cavity 54 and the electric servo-motor 50 pushes on the bottom wall 36 of the mould 32. In this way the polyurethane 34 is compacted to obtain the outsole 56.

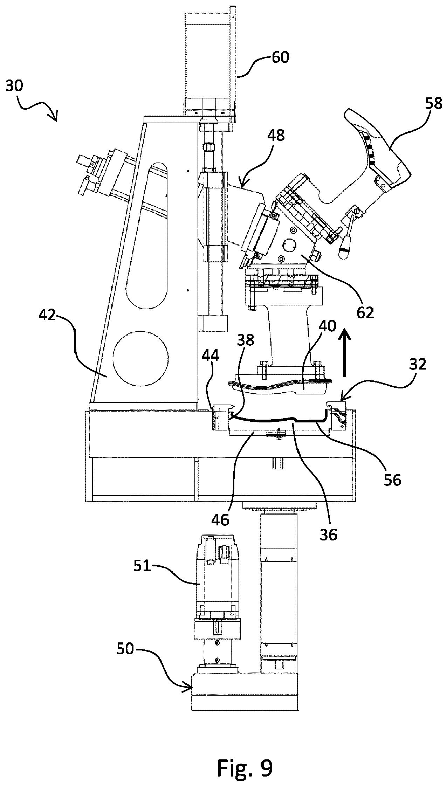

Figure 9 shows the step wherein the side walls 38 of the mould 32 have been opened, thus freeing the die 40 which has been lifted by the linear actuator 60. In the cavity 54 of the mould 32 remains the outsole 56, ready for the subsequent processing steps, which is preferably lowered by means of the electric servo-motor 50. At the same time, a shoe upper 58 has been fitted on the second die 40.

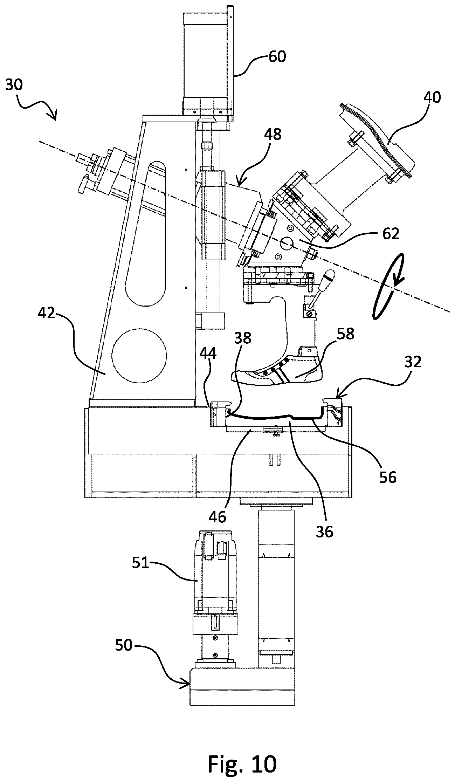

Figure 10 shows the step wherein the revolving head 62 has removed the first die 40 and has arranged the second die 40 with the shoe upper 58 close to the mould 32.

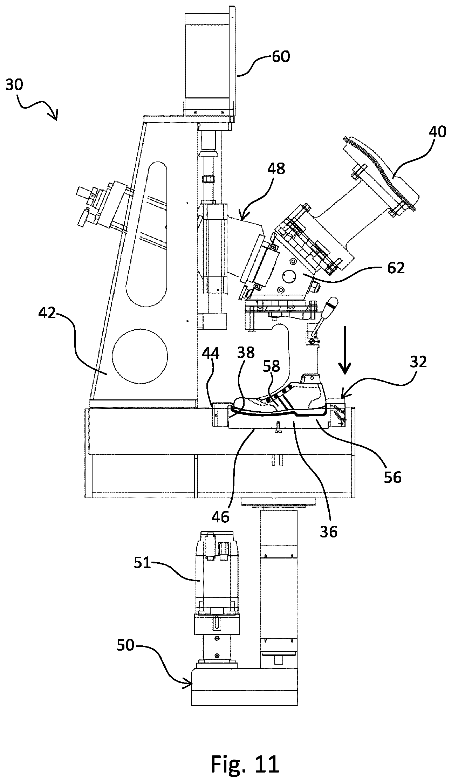

Figure 11 shows the step wherein the second die 40 and the shoe upper 58 have been lowered by the linear actuator 60. The side walls 38 of the mould 32 have been closed, engaging the second die 40 and the shoe upper 58, to prepare the cavity 54 for a new polyurethane injection 34.

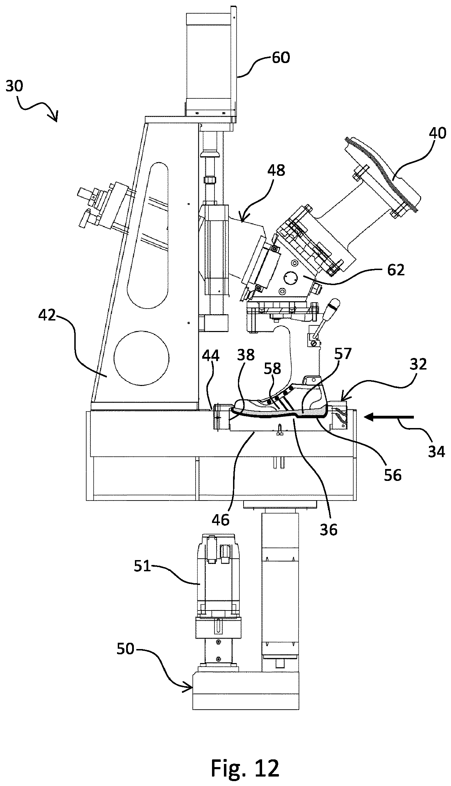

Figure 12 shows the step wherein the polyurethane 34 is re-injected into the cavity 54 and the electric servo-motor 50 pushes on the bottom wall 36 of the mould 32. In this way the polyurethane 34 is compacted to obtain the midsole 57.

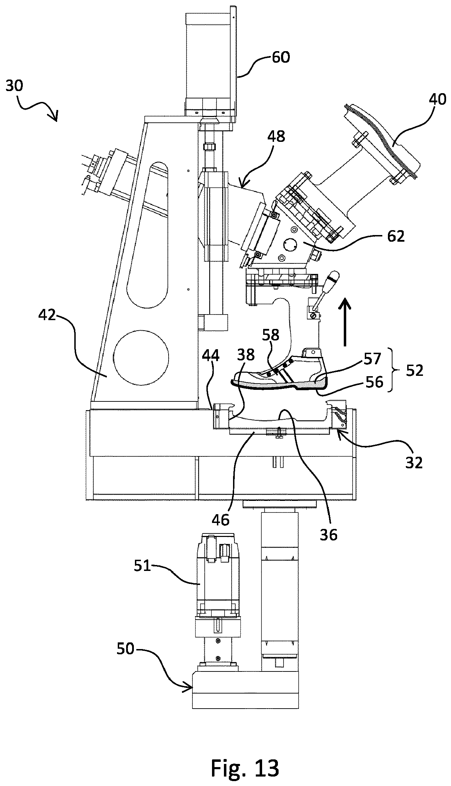

Figure 13 shows the step wherein the side walls 38 of the mould 32 have been reopened, thus freeing the die 40 which has been lifted by the linear actuator 60. Together with the die, also the shoe upper 58 is lifted together with the related sole-assembly 52. The cavity 54 of the mould 32 remains empty, ready to start a new processing cycle.

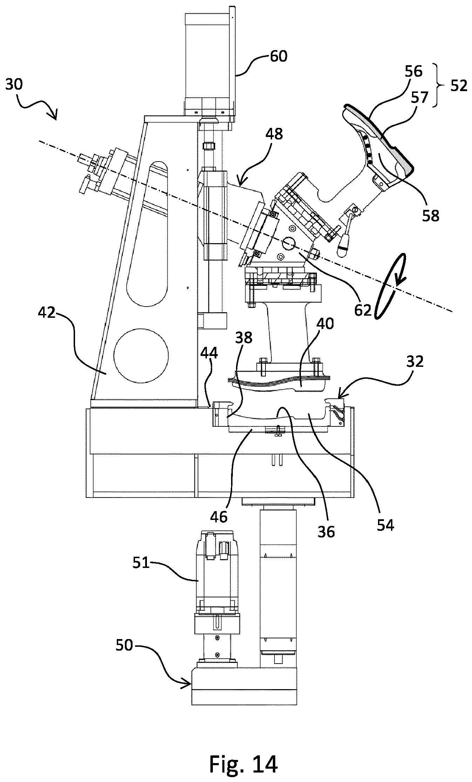

Figure 14 shows the step wherein the revolving head 62 has removed the second die 40 and the shoe upper 58 and has arranged the first die 40 close to the mould 32.

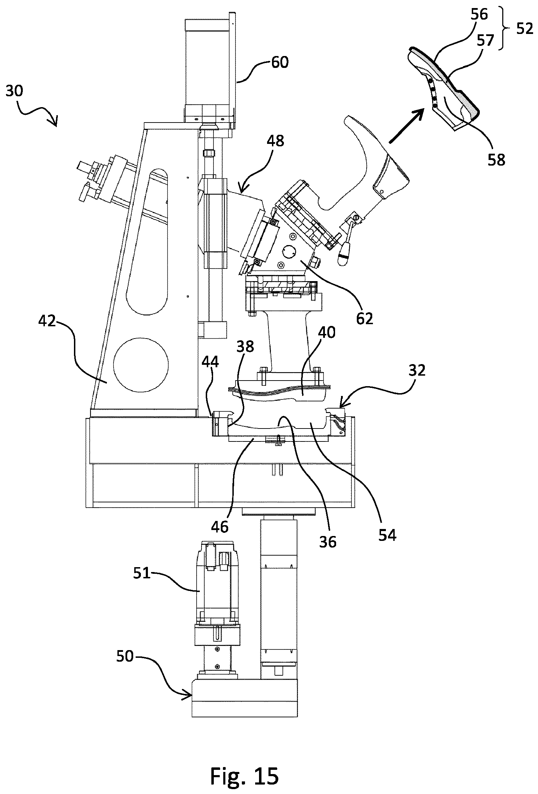

Figure 15 shows the step wherein the shoe upper 58 together with the related sole-assembly 52 are removed from the second die 40, completely freeing the mould holder 30 so that it can be returned to the configuration of Figure 8 to start a processing cycle.

As the skilled person can well understand, the invention allows to overcome the drawbacks highlighted above with reference to the prior art. Particularly, the present invention makes a mould holder 30 available for injection moulding processing of polyurethane 34 which makes it possible to easily adjust the displacements of the mould 32.

Furthermore, the present invention makes a mould holder 30 available for injection moulding processing of polyurethane 34 which makes it possible to manage the forces and displacements of the mould 32 separately.

Lastly, the present invention makes a mould holder 30 available for injection moulding processing of polyurethane 34 which makes it possible to adjust the speed of the displacement, e.g. between one processing and another or along the single working stroke of the mould 32.

It is clear that the specific characteristics are described in relation to different embodiments of the invention with an exemplary and non-limiting purpose. Obviously, one skilled in the art will be able to make further modifications and variations to the present invention, in order to satisfy contingent and specific needs. For example, the technical characteristics described in relation to an embodiment of the invention can be extrapolated from it and applied to other embodiments of the invention. Moreover, such modifications and variations are within the protection scope of the invention, as defined by the following claims.

## Claims

1. Mould holder (30) for injection moulding processing of polyurethane (34), conformed for holding a mould (32) for injection moulding of polyurethane (34), the mould (32) comprising a vertically movable bottom wall (36), side walls (38) which can be opened/closed and at least one removable die (40) suitable for providing the top wall of the mould (32), wherein the mould holder (30) comprises:
- a stiff structure (42);
- a working portion (44) suitable for receiving the side walls (38) of the mould (32);
- a support surface (46) suitable for supporting and vertically moving the bottom wall (36) of the mould (32);
- an upper assembly (48) suitable for holding and moving the at least one removable die (40) of the mould (32);
**characterized in that** it comprises an electric servo-motor (50) suitable for driving the movement of the support surface (46) with respect to the stiff structure (42).

2. Mould holder (30) according to claim 1, wherein the upper assembly (48) comprises a linear actuator (60) on which a revolving head (62) is mounted.

3. Mould holder (30) according to claim 1 or 2, wherein the electric servo-motor (50) comprises an electric motor (51) of the brushless type and/or of the stepper type.

4. Mould holder (30) according to one or more of the preceding claims, further comprising a control unit (64), a memory unit (66) and a user interface (68).

5. Mould holder (30) according to the preceding claim, wherein the control unit (64) is suitable for actuating the electric servo-motor (50).

6. Mould holder (30) according to claim 4 or 5, wherein the control unit (64) is adapted to actuate the electric servo-motor (50) controlling the same either by force or by displacement, alternatively.

7. Mould holder (30) according to one or more of claims 4 to 6, wherein the control unit (64) is adapted to actuate the electric servo-motor (50) imposing different displacement speeds.

8. Mould holder (30) according to one or more of claims 2 to 7, wherein the revolving head (62) is motor-powered.

9. Mould holder (30) according to claim, wherein the side walls (38) which can be opened/closed of the mould (32) comprise auxiliary actuators suitable for imposing to the side walls (38) the opening and closing movements.

10. Mould holder (30) according to one or more of claims 4 to 9, wherein the control unit (64) is further suitable for actuating one or more among: the linear actuator (60) of the upper assembly (48), the motor-powered revolving head (62) of the upper assembly (48), the auxiliary actuators of the side walls (38) of the mould (32).

11. Mould holder (30) according to one or more of claims 2 to 10, wherein the linear actuator (60) of the upper assembly (48) comprises an electric servo-motor (61).
